# EUROPEAN PATENT SPECIFICATION

(11) **EP 3 496 006 B1**
(45) Date of publication and mention of the grant of the patent: **27.12.2023**
(21) Application number: 17836275.2
(22) Date of filing: 17.07.2017
(51) Int. Cl.: G06N 3/063, G06F 9/30

(54) **OPERATION UNIT, METHOD AND DEVICE CAPABLE OF SUPPORTING OPERATION DATA OF DIFFERENT BIT WIDTHS**
OPERATIONSEINHEIT, VERFAHREN UND VORRICHTUNG ZUR UNTERSTÜTZUNG VON BETRIEBSDATEN MIT VERSCHIEDENEN BITBREITEN
UNITÉ DE COMMANDE, PROCÉDÉ ET DISPOSITIF APTES À PRENDRE EN CHARGE DES DONNÉES DE FONCTIONNEMENT DE DIFFÉRENTES LARGEURS DE BIT

(30) Priority: 05.08.2016 CN 201610640111
(43) Date of publication of application: 12.06.2019
(73) Proprietor: Cambricon Technologies Corporation Limited, Beijing 100191 (CN)
(72) Inventor: CHEN, Tianshi, Shanghai 201203 (CN); GUO, Qi, Shanghai 201203 (CN); DU, Zidong, Shanghai 201203 (CN)
(74) Representative: AWA Sweden AB
(86) International application number: PCT/CN2017/093159
(87) International publication number: WO 2018/024093

(56) References cited:
- EP-A2- 2 905 699
- CN-A- 102 012 876
- CN-A- 102 238 348
- CN-A- 103 188 487
- US-A1- 2002 174 319
- US-A1- 2007 203 967
- US-A1- 2008 016 319
- US-A1- 2011 320 765

## Description

### FIELD OF THE INVENTION

The present invention relates to the field of computer, in particular, to an operation unit, an operation method and an operation device supporting the operation of the operation data with different bit widths.

### BACKGROUND OF THE INVENTION

Artificial neural networks (ANNs), abbreviated as neural networks (NNs), are mathematical models that simulate the behavior of animal neural networks and perform distributed parallel information processing. This type of network relies on the complexity of the system to achieve the purpose of processing information by adjusting the interconnected relationships among a large number of internal nodes. At present, neural networks have achieved great development in many areas such as intelligent control and machine learning. Since the neural network belongs to the mathematical model of the algorithm, which involves a large number of mathematical operations, how to quickly and accurately perform the neural network operation is an urgent problem to be solved. Among them, the bit widths required for expressing and operating by each parameter in different levels of neural network are different. Using different bit width operation units can reduce the actual operation amount and reduce the power consumption. By combining the low-bit width operators into high-bit width operators, the low-bit width operators can be reused to reduce the number of processors and reduce the area of the device. US2002/174319 A1 relates to a method and apparatus for reducing logic activity in a microprocessor. US2011/320765 A1 relates to a variable width vector instruction processor. US 2008/016319A1 relates to a processor architecture for instance for multimedia applications. US 2007/203967 A1 relates to a floating-point processor with reduced power requirements for selectable sub-precision. EP 2 905 699 A2 relates to a processor performing approximate computing instructions.

### OBJECTS AND SUMMARY OF THE INVENTION

In view of this, the purpose of the present invention is to provide an operation unit, an operation method and an operation device supporting the operation of the operation data with different bit-widths to realize efficient neural network operations, matrix operations and vector operations. The invention is defined by the appended claims.

The operation unit, operation method and operation device provided by the present invention firstly determine whether there is an operator with the same bit width as the operation data, and if so, the operation data is transmitted directly to the corresponding operator, otherwise, an operator combination strategy is generated and a plurality of operators are combined to a new operator according to the operator combination strategy so that the bit width of the new operator matches the bit width of the operation data and the operation data is transmitted to the new operator; then, the operator that obtains the operation data is commanded to perform a neural network operation/matrix operation/vector operation.

In addition, according to the invention, the operations of operation data with different bit widths are performed according to the instruction, and the instruction is implemented in two ways: one is a method of directly adopting one instruction, which includes both an operand and a bit width domain, and the operation unit can directly obtain an operator of the operand and corresponding bit width according to the instruction to perform a corresponding operation; the other is using two instructions, wherein the operation unit first obtains or constructs an operator with corresponding bit width according to a bit width configuration instruction, and then obtains an operand according to the operation instruction to perform a corresponding operation.

The present invention has the following beneficial effects:
1. In the present invention, the bit width of the operation data is specified by the bit width domain in the instruction, so that the bit width of the operation data can be arbitrarily configured as needed. For the operation data with a certain bit width, if there is an operator that matches the bit width, the operator can be called directly to perform an operation, if the bit width of the operation data is too large and there is no operator that matches the bit width, multiple operators with lower width are combined to construct new operators and perform operations with new operators. Thus the present invention can support the operation of the operation data with different bit-widths to realize efficient neural network operations, matrix operations and vector operations, and at the same time, save the number of operation units and reduce the hardware area.
2. The present invention employs a scratchpad memory, which enables storage of operation data (eg, neurons, vectors, matrices) with different lengths and different bit widths.

### BRIEF DESCRIPTION OF FIGURES

Fig. 1 is a structural schematic view of the operation device provided by the present invention.
Fig. 2 is a schematic view of the structure of the operation unit provided by the present invention.
Fig. 3 is a schematic view of an instruction format for performing operations based on one instruction in the present invention.
Fig. 4 is a format view of a neural network operation instruction of the present invention.
Fig. 5 is a format view of a matrix-matrix operation instruction of the present invention.
Fig. 6 is a format view of a vector-vector operation instruction of the present invention.
Fig. 7 is a format view of a matrix-vector operation instruction of the present invention.
Fig. 8 is a structural schematic view of the operation device according to embodiments of the present invention.
Fig. 9 is a schematic view of the structure of the decoding module in the embodiments of the present invention.
Fig. 10 is a flowchart of an operation performed by the operation device according to embodiments of the present invention using one instruction.
FIG. 11 is a schematic view of a format of a bit width configuration instruction in an operation that uses two instructions in the present invention.
FIG. 12 is a schematic view of a format of an operation instruction in an operation that uses two instructions in the present invention.
Fig. 13 is a format view of a neural network bid width configuration instruction of the present invention.
Fig. 14 is a format view of a neural network operation instruction of the present invention.
Fig. 15 is a format view of a matrix-matrix bit width configuration instruction of the present invention.
Fig. 16 is a format view of a matrix-matrix operation instruction of the present invention.
Fig. 17 is a format view of a vector-vector bit width configuration instruction of the present invention.
Fig. 18 is a format view of a vector-vector operation instruction of the present invention.
Fig. 19 is a format view of a matrix-vector bit width configuration instruction of the present invention.
Fig. 20 is a format view of a matrix-vector operation instruction of the present invention.
Fig. 21 is a flowchart of an operation performed by the operation device according to embodiments of the present invention using two instructions.

### DETAILED DESCRIPTION OF THE EMBODIMENTS

The present invention discloses an operation unit, an operation method and an operation device capable of supporting operation data with different bit widths, configures the bit width of the operation data through configuring the bit width of the configuration instruction; when the operation is performed according to the instruction, it determines whether there is an operator with the same bit width as the operation data, and if so, the operation data is transmitted directly to the corresponding operator, otherwise, an operator combination strategy is generated and a plurality of operators are combined to a new operator according to the operator combination strategy so that the bit width of the new operator matches the bit width of the operation data and the operation data is transmitted to the new operation data; then, the operator that obtains the operation data is commanded to perform a neural network operation/matrix operation/vector operation. The present invention can support the operation of the operation data with different bit-widths to realize efficient neural network operations, matrix operations and vector operations, and at the same time, save the number of operation units and reduce the hardware area.

In order that the objectives, technical schemes and advantages of the present invention will become more apparent, the present invention will be described in more detail in conjunction with specific embodiments and with reference to the drawings and examples above.

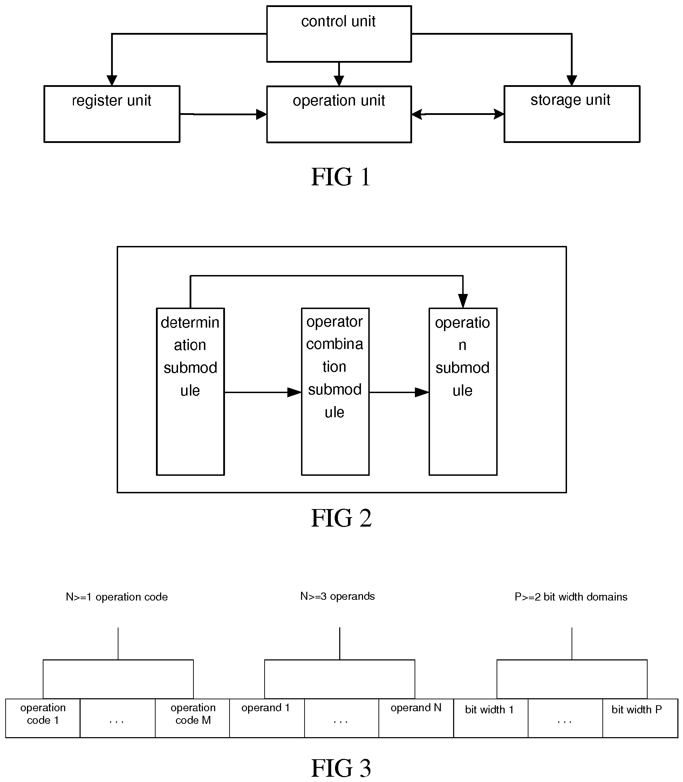

Fig. 1 is a structural schematic view of the operation device provided by the present invention. As shown in Fig. 1, the operation device comprises:
a storage unit used to store neurons/matrices/vectors. In one embodiment, the storage unit may be a Scratchpad Memory, which can support neurons/matrices/vectors with different lengths and bit widths. The necessary operation data is temporarily stored in the Scratchpad Memory, so that the operation device can more flexibly and effectively support data of different lengths and different bit widths in performing neural network operations and matrix/vector operations. The Scratchpad Memory can be implemented by various different memory devices (SRAM, eDRAM, DRAM, memristor, 3D-DRAM or non-volatile memory, etc.).

A register unit used to store neurons/matrices/vector addresses, wherein: the neuron address is the address of the neuron stored in the storage unit, the matrix address is the address of the matrix stored in the storage unit, and the vector address is the address of the vector stored in the storage unit. In one embodiment, the register unit may be a scalar register stack providing the scalar register needed during the operation process. The scalar register not only stores neurons/matrices/vector addresses, but also stores scalar data. When it comes to matrix/vector and scalar operations, the operation unit not only has to obtain a matrix/vector address from the register unit, but also obtains the corresponding scalar from the register unit.

A control unit used to control the behavior of each module in the device. In one embodiment, the control unit reads the prepared instruction, performs decoding and generates a plurality of micro instructions, and sends them to other modules in the device. The other modules perform corresponding operations according to the obtained micro instructions.

An operation unit used to obtain the instruction, obtain the neuron/matrix/vector address in the register unit according to the instruction, and then obtain the corresponding neuron/matrix/vector in the storage unit according to the neuron/matrix/vector address, thus performs an operation on the operation data (neuron/matrix/vector). Operations performed by the operation unit includes, but are not limited to forward propagation operations of convolutional neural network, training operations of convolutional neural network, pooling operations of neural network, forward propagation operations of full connection neural network, training operations of full connection neural network, operations of batch normalization, operations of RBM neural network, operations of matrix-vector multiplication, operations of matrix-matrix addition/subtraction, vector outer product (tensor) operations, vector inner product operations, vector operation operations, vector logic operations, vector transcendental function operations, vector comparison operations, vector maximum/minimum operations, vector cyclic shift operations, random vector operations generating to follow a certain distribution.

The operation unit selects the corresponding one or more operators to perform the operation according to the bit width of the operation data indicated by the operands in the instruction during the execution of the operation, wherein one or more operators have different bit widths. For example, some operators support 16-bit data operations, some operators support 32-bit data operations. The operators can essentially be vector multiplication components, accumulation components, and scalar multiplication components. As shown in Fig. 2, the operation unit comprises a determination submodule, an operator combination submodule and an operation submodule;
the determination submodule is used to determine whether there is an operator with the same bit width indicated by the operand as the operand, and if so, the operand is transmitted to the corresponding operator, otherwise, an operator combination strategy and the operand are transmitted to the operator combination submodule;
the operator combination submodule is used to combine a plurality of operators into a new operator according to the operator combination strategy so that the bit width of the new operator matches the bit width of the operand, and the operand is transmitted to the new operator. Specifically, the operator combination strategy means that the operators with larger bit width are preferred for combination. When there is an operator with the same bit width, the corresponding operator is directly used; if not, the available operator with smaller and closest bid width compared with the requirement is used for combination. For example, when available bit widths for combined operations are 8 bits, 16 bits, 32 bits respectively, when the required bit width of the operator is 32 bits, the 32-bit operator is used directly; when the required bit width of the operator is 64 bits, two 32-bit operation units are used for combination; when the required bit width of the operation unit is 48 bits, a 32-bit operation unit and a 16-bit operation unit are combined; when the required bit width of the operation unit is 40 bits, a 32-bit operation unit and an 8-bit operation unit are combined.

The operation submodule is used to cause an operator that obtains the operand to perform an operation.

The instruction of the present invention is implemented in two ways: one is a method of directly adopting one instruction, which includes both an operand and a bit width domain, and the operation unit can directly obtain an operator of the operand and corresponding bit width according to the instruction to perform a corresponding operation; the other is using two instructions, wherein the operation unit first obtains or constructs an operator with corresponding bit width according to a bit width configuration instruction, and then obtains an operand according to the operation instruction to perform a corresponding operation.

It should be noted that the instruction set of the present invention adopts the Load/Store structure, and the operation unit does not operate on the data in the memory. This instruction set uses a very long instruction word architecture. Through the different configuration of instructions, complex neural network operations can be completed, and simple matrix/vector operations can also be completed. In addition, this instruction set uses fixed-length instructions at the same time, so that the neural network operation and the matrix/vector operation device of the present invention obtain the next instruction in the decoding stage of the previous instruction.

Fig. 3 is a schematic view of an instruction format for performing operations based on one instruction in the present invention. As shown in Fig. 3, the instruction comprises at least one operation code and at least 3 operands and at least two bit width domains, wherein the bit width domain is the same as the number of operands upon operating in the operator; wherein the operation code is used to indicate the function of the operation instruction and the operation unit can perform different operations by recognizing one or more operation codes, the operand is used to indicate the data information of the operation instruction, and the bit width domain is used to indicate the bit width of corresponding operand; wherein the data information may be an immediate or a register number; for example, to obtain a matrix, a matrix start address and a matrix length can be obtained from the corresponding register according to the register number and then the matrix stored at the corresponding address can be obtained in the storage unit according to the matrix start address and the matrix length.

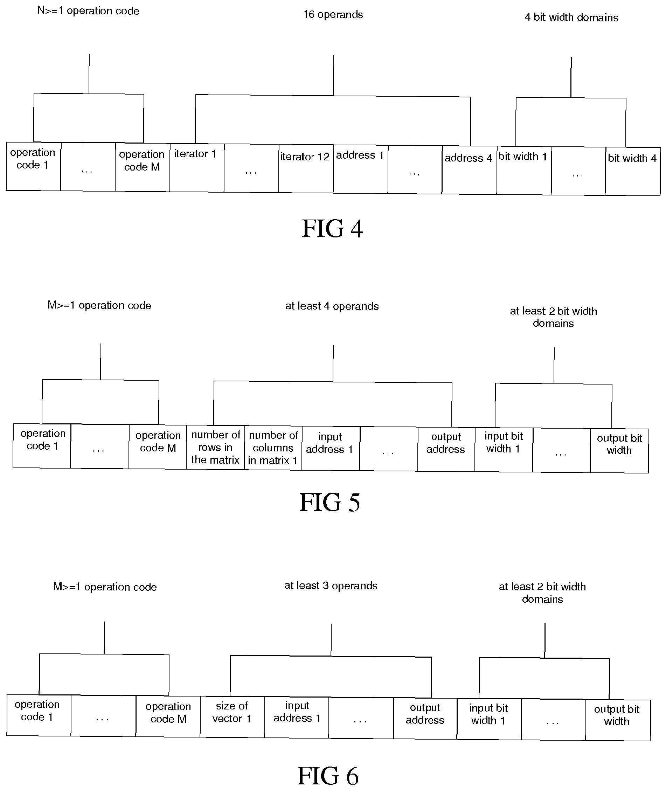

Fig. 4 is a format view of a neural network operation instruction of the present invention. This instruction is an instantiated instruction of the instruction of Fig. 3. As shown in Fig. 4, the operation instruction for neural network comprises at least one operation code and 16 operands and 4 bit width domains, wherein the operation code is used to indicate the function of operation the instruction of the neural network and the operation unit can perform different operations for neural network by recognizing one or more operation codes, the operand is used to indicate the data information of operation instruction for the neural network in which the data information may be an immediate or a register number, the bit width domain is used to indicate the corresponding bit width of the operand during the operation while indicating the bit width of corresponding operation during operation and indicating whether it is necessary to combine low-bit width operators into high-bit width operation units.

Fig. 5 is a format view of a matrix-matrix operation instruction of the present invention. This instruction is an instantiated instruction of the instruction of Fig. 3. As shown in Fig. 5, the matrix-matrix operation instruction comprises at least one operation code and 4 operands and 2 bit width domains, wherein the operation code is used to indicate the function of operation the matrix-matrix operation instruction and the operation unit can perform different matrix-matrix operations by recognizing one or more operation codes, the operand is used to indicate the data information of matrix-matrix operation instruction in which the data information may be an immediate or a register number, the bit width domain is used to indicate the corresponding bit width of the operand during the operation while indicating the bit width of corresponding operation during operation and indicating whether it is necessary to combine low-bit width operators into high-bit width operation units.

Fig. 6 is a format view of a vector-vector operation instruction of the present invention. This instruction is an instantiated instruction of the instruction of Fig. 3. As shown in Fig. 6, the vector-vector operation instruction comprises at least one operation code and 3 operands and 2 bit width domains, wherein the operation code is used to indicate the function of operation the vector-vector operation instruction and the operation unit can perform different vector-vector operations by recognizing one or more operation codes, the operand is used to indicate the data information of vector-vector operation instruction in which the data information may be an immediate or a register number, the bit width domain is used to indicate the corresponding bit width of the operand during the operation while indicating the bit width of corresponding operation during operation and indicating whether it is necessary to combine low-bit width operators into high-bit width operation units.

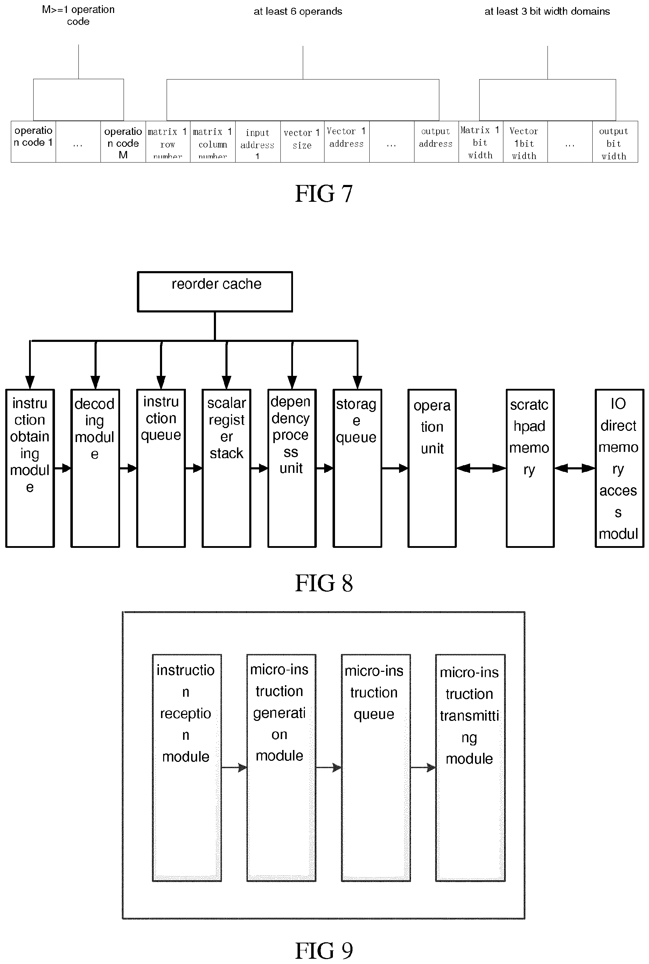

Fig. 7 is a format view of a matrix-vector operation instruction of the present invention. This instruction is an instantiated instruction of the instruction of Fig. 3. As shown in Fig. 7, the matrix-vector operation instruction comprises at least one operation code and 6 operands and 3 bit width domains, wherein the operation code is used to indicate the function of operation the matrix-vector operation instruction and the operation unit can perform different matrix-vector operations by recognizing one or more operation codes, the operand is used to indicate the data information of matrix-vector operation instruction in which the data information may be an immediate or a register number, the bit width domain is used to indicate the corresponding bit width of the operand during the operation while indicating the bit width of corresponding operation during operation and indicating whether it is necessary to combine low-bit width operators into high-bit width operation units.

Fig. 8 is a structural schematic view of the operation device according to a preferred embodiment of the present invention. As shown in Fig. 8, the device comprises an instruction obtaining module, a decoding module, an instruction queue, a scalar register, a dependency process unit, a storage queue, a reorder cache, an operation unit, a scratchpad memory, an IO memory access module;
The instruction obtaining module is responsible for taking the next instruction to be performed from the instruction sequence and transmitting the instruction to the decoding module;
The decoding module is responsible for decoding the instruction and transmitting the decoded instruction to the instruction queue. As shown in Fig. 9, the decoding module comprises an instruction reception module, a micro-instruction generation module, a micro-instruction queue, a micro-instruction transmitting module, wherein the instruction reception module is responsible for accepting the instruction obtained from the instruction obtaining module, the micro-instruction decoding module decodes the instruction obtained by the instruction reception module into micro-instructions for controlling each functional component; the micro-instruction queue is used to store the micro-instruction transmitted from the micro-instruction decoding module, and the micro-instruction transmitting module is responsible for transmitting the micro-instruction to each functional component;
The instruction queue is used to sequentially cache decoded instructions for sending to the dependency process unit;
The scalar register stack provides the scalar register required by the device during operation;
The dependency process unit processes the possible storage dependency between the instruction and the previous instruction; The matrix operation instruction may access the scratchpad memory and the previous and next instructions may access the same storage space. In order to ensure the correctness of the instruction execution result, if the current instruction is detected to have a dependency on the data of the previous instruction, the instruction must wait in the storage queue until the dependency is eliminated.

The storage queue is an ordered queue, the instruction that has dependencies on the data with the previous instruction is stored in the queue, and the instruction is submitted after the dependency is eliminated.

The reorder cache: during the execution of an instruction, it is also cached in the module; when an instruction is executed and if the instruction is also the earliest instruction in the unordered instruction in the reorder cache, the instruction will be submitted. Once submitted, the changes made to the state of the device by this instruction will not be undone; the instructions in the reorder cache will act as a placeholder, and if there is a data dependency in the first instruction it contains, then the instruction will not be submitted (released); although there will be a lot of instructions continue to enter, but only part of the instructions (by the reordering cache size control) can be accepted; the entire operation will not be smooth until the first instruction is submitted.

The operation unit is responsible for all neural network operations and matrix/vector operations of the device, including but are not limited to forward propagation operations of convolutional neural network, training operations of convolutional neural network, pooling operations of neural network, forward propagation operations of full connection neural network, training operations of full connection neural network, operations of batch normalization, operations of RBM neural network, operations of matrix-vector multiplication, operations of matrix-matrix addition/subtraction, vector outer product (tensor) operations, vector inner product operations, vector operation operations, vector logic operations, vector transcendental function operations, vector comparison operations, vector maximum/minimum operations, vector cyclic shift operations, random vector operations generating to follow a certain distribution. The operation instruction is sent to the operation unit for execution. First, the operation unit determines whether there is an operator having the same bit width domain length as the operand in the instruction. If so, the corresponding operation unit is selected. If not, a plurality of low bit width operation units are combined to form a necessary operator with bit width. Then, corresponding operations are performed on the operands selected by the selected operands according to the operation codes in the instructions, and corresponding results are obtained;

The scratchpad memory is a data-only temporary storage device that can support data of different lengths and different bit widths;

The IO memory access module is used to directly access the scratchpad memory and is responsible for reading data from or writing data to the scratchpad memory.

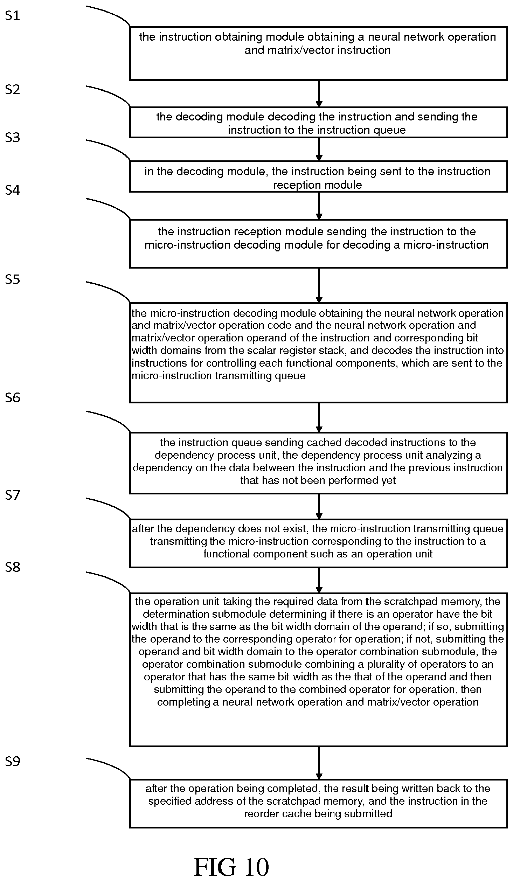

Fig. 10 is a flowchart of an operation performed by the operation device according to embodiments of the present invention using one instruction. As shown in Fig. 10, the process comprises:
S1, the instruction obtains module obtaining an instruction and sends the instruction to the decoding module.
S2, the decoding module decodes the instruction and sends the instruction to the instruction queue.
S3, in the decoding module, the instruction is sent to the instruction reception module.
S4, the instruction reception module sends the instruction to the micro-instruction generation module for generating a micro-instruction.
S5, the micro-instruction generation module obtains the neural network operation code and operand of the instruction from the scalar register stack, and decodes the instruction into micro-instructions for controlling each functional components, which are sent to the micro-instruction transmitting queue.
S6, after obtaining required data, the instruction is sent to the dependency process unit. The dependency process unit analyzes whether there is a dependency on the data between the instruction and the previous instruction that has not been performed yet. This instruction has to wait in the storage queue until it no longer has a dependency on the data from the previous instruction that does end.
S7, after the dependency does not exist, the micro-instruction corresponding to the neural network operation and the matrix/vector instruction is sent to a functional component such as an operation unit.
S8, the operation unit takes the required data from the scratchpad memory according to the address and size of the required data, and then determines if there is an operation unit that is the same as the bit width domain in the command. If so, the matching operator is used to complete the operation corresponding to the instruction. If not, the corresponding operation of the instruction is completed by combining the low bit width operators together to form a desired bit width operator.
S9, after the operation is completed, the output data is written back to the specified address of the scratchpad memory, and the instruction in the reorder cache is submitted.

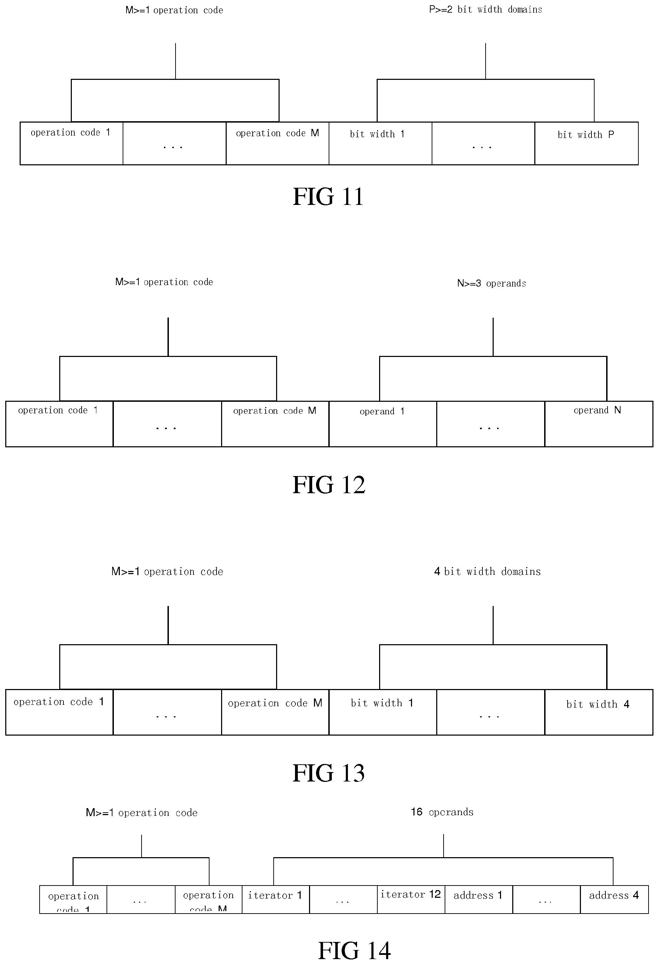

Fig.11 and 12 are schematic views of an instruction format for performing operations based on two instructions in the present invention. As shown, Fig. 11 is a format view of bit width configuration instruction. The bit width configuration instruction comprises at least one operation code and at least two bit width domains for indicating the bit width of the operator used by the next operation instruction. Fig. 12 is a format view of operation instruction. The operation instruction comprises at least one operation code and at least 3 operands, wherein the operation code is used to indicate the function of the operation instruction and the operation unit can perform different operations by recognizing one or more operation codes, the operand is used to indicate the data information of the operation instruction; wherein the data information may be an immediate or a register number; for example, to obtain a matrix, a matrix start address and a matrix length can be obtained from the corresponding register according to the register number and then the matrix stored at the corresponding address can be obtained in the storage unit according to the matrix start address and the matrix length.

Fig. 13-14 are instantiations of Figures 11-12, and are format views of bit width configuration instruction and operation instruction for neural network. As shown in Fig. 13-14, the bit width configuration instruction comprises at least one operation code and at least four bit width domains for indicating the bit width of the operator used by the next operation instruction for neural network. The configuration instruction comprises at least one operation code and 16 operands, wherein the operation code is used to indicate the function of operation the instruction of the neural network and the operation unit can perform different operations for neural network by recognizing one or more operation codes, the operand is used to indicate the data information of operation instruction for the neural network in which the data information may be an immediate or a register number.

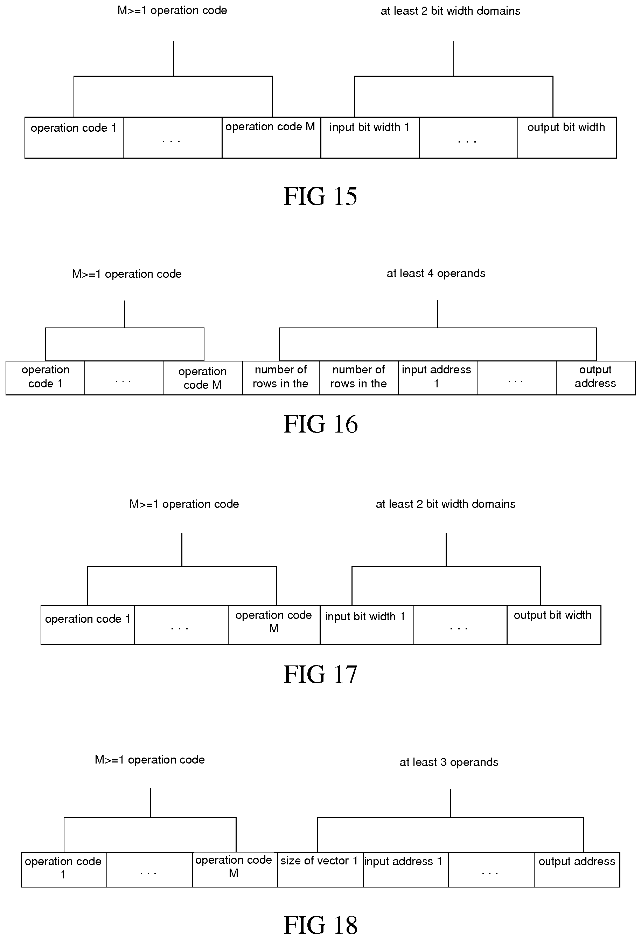

Fig.15~16 are instantiations of Figures 11-12, and are format views of matrix-matrix bit width configuration instruction and matrix-matrix operation instruction. As shown in Fig. 15-16, the bit width configuration instruction comprises at least one operation code and at least two bit width domains for indicating the bit width of the operator used by the next matrix-matrix operation instruction. The matrix-matrix operation instruction comprises at least one operation code and at least four operands. Among them, the operation code is used to indicate the function of the matrix-matrix operation instruction and the operation unit can perform different matrix operations by recognizing one or more operation codes, the operand is used to indicate the data information of matrix-matrix operation instruction in which the data information may be an immediate or a register number.

Fig. 17-18 are instantiations of Figures 11-12, and are format views of vector-vector bit width configuration instruction and vector-vector operation instruction. As shown in Fig. 17-18, the bit width configuration instruction comprises at least one operation code and at least two bit width domains for indicating the bit width of the operator used by the next vector-vector operation instruction. The vector-vector operation instruction comprises at least one operation code and at least 3 operands, wherein the operation code is used to indicate the function of vector-vector operation instruction and the operation unit can perform different vector operations by recognizing one or more operation codes, the operand is used to indicate the data information of vector-vector operation instruction in which the data information may be an immediate or a register number.

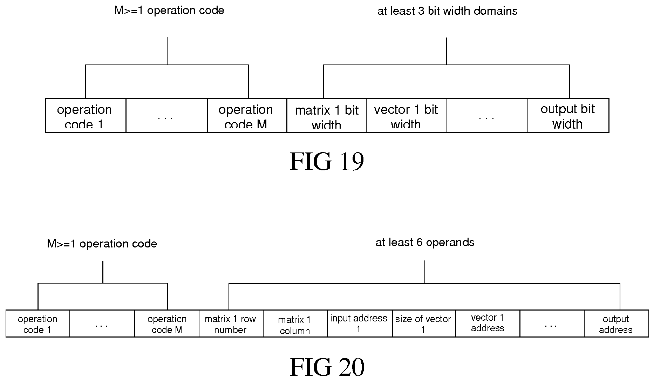

Fig. 19-20 are instantiations of Figures 11-12, and are format views of matrix-vector bit width configuration instruction and matrix-vector operation instruction. As shown in Fig. 19-20, the bit width configuration instruction comprises at least one operation code and at least three bit width domains for indicating the bit width of the operator used by the next vector-vector operation instruction. The matrix-vector operation instruction comprises at least one operation code and at least 6 operands, wherein the operation code is used to indicate the function of matrix-vector operation instruction and the operation unit can perform different matrix and vector operations by recognizing one or more operation codes, the operand is used to indicate the data information of matrix-vector operation instruction in which the data information may be an immediate or a register number.

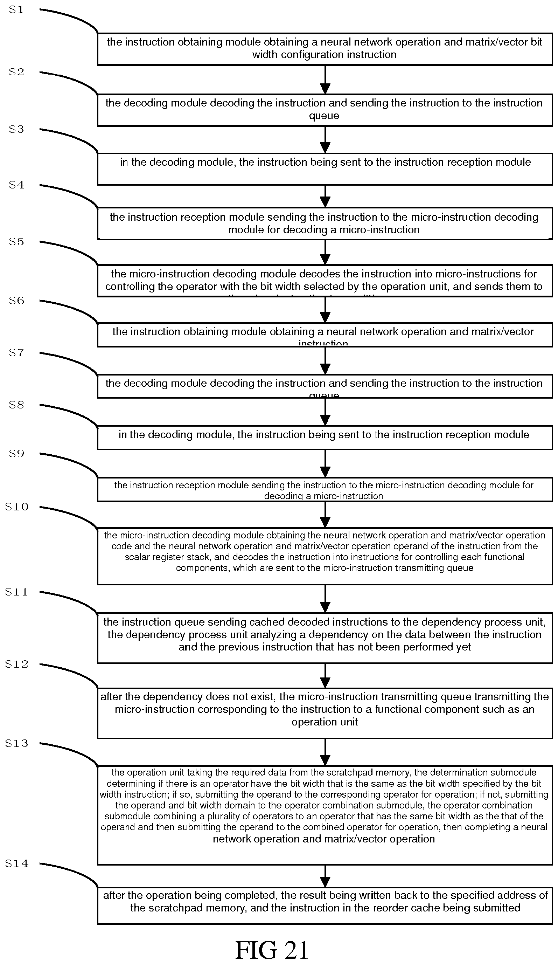

Fig. 21 is a flowchart of an operation performed by the operation device according to embodiments of the present invention using two instructions. As shown in Fig. 21, the process comprises:
Step S1, the instruction obtains module obtaining a bit width configuration instruction and sends the instruction to the decoding module;
Step S2, the decoding module decodes the instruction and sends the instruction to the instruction queue;
Step S3, in the decoding module, the instruction is sent to the instruction reception module;
Step S4, the instruction reception module sends the instruction to the micro-instruction decoding module for decoding a micro-instruction;
Step S5, the micro-instruction decoding module decodes the instruction into micro-instructions for controlling the operator with the bit width selected by the operation unit, and sends them to the micro-instruction transmitting queue;
Step S6, the instruction obtaining module obtains a neural network operation and matrix/vector instruction, and sends the instruction to the decoding module;
Step S7, the decoding module decodes the instruction and sends the instruction to the instruction queue;
Step S8, in the decoding module, the instruction is sent to the instruction reception module;
Step S9, the instruction reception module sends the instruction to the micro-instruction decoding module for decoding a micro-instruction;
Step S10, the micro-instruction decoding module obtains the neural network operation code and operand of the instruction from the scalar register stack, and decodes the instruction into micro-instructions for controlling each functional components, which are sent to the micro-instruction transmitting queue;
Step S11, after obtaining the necessary data, the instruction is sent to the dependency process unit; the dependency process unit analyzes whether there is a dependency relationship between the instruction and the instruction that has not been previously performed. If there is, the instruction has to wait in the storage queue until it no longer has a dependency on the data from the instruction that has not been previously performed;
Step S12, the micro-instruction corresponding to the instruction and the previous micro-instruction of the operator with designated bit width are sent to the operation unit;
Step S13, the operation unit takes the required data from the scratchpad memory according to the address and size of the required data; then determines if there is an operation unit that is the same as the bit width domain in the instruction with designated bit width. If so, the matching operator is used to complete the operation for neural network and/or matrix/vector operation corresponding to the instruction. If not, the operation for neural network and/or matrix/vector operation corresponding to the instruction is completed by combining the low bit width operators together to form a desired bit width operator;
S14, after the operation is completed, the output data is written back to the specified address of the scratchpad memory, and the instruction in the reorder cache is submitted.

In summary, the present invention discloses a configurable device and method for performing neural network operation and matrix/vector operation, can solve the problem of neural network operation and a large number of matrix/vector operations in the current computer domain with the corresponding instructions. Compared with the existing traditional solutions, the present invention can have instructions configurable, easy to use, wherein the bit width of the operator can be selected and multiple operators can be combined, and the bit width configuration of the operation unit is realized through dedicated bit width configuration instructions and bit width domain specified on the operation instructions. It also has the advantages of the supported neural network scale and matrix/vector bit width and size being flexible, sufficient on-chip caches, and the possibility of combining operation units.

The above-mentioned specific embodiments describe the purpose, technical solution and beneficial effects of the present invention in further detail. It should be understood that The foregoing is only specific embodiments of the present invention and is not intended to be limiting of the present invention, and any modifications, equivalent substitutions, improvements and the like within the principles of the present invention are intended to be embraced by the protection range of the present invention.

## Claims

1. An operation unit for selecting a corresponding one or more operators to perform operations based on a bit width of an operation data, wherein the one or more operators have different bid widths,
**characterized in that** the operation unit comprises a determination submodule, an operator combination submodule and an operation submodule;
the determination submodule is used to determine whether there is an operator with the same bit width as the operation data, and if so, the operation data is transmitted to the corresponding operator, otherwise, an operator combination strategy and the operation data are transmitted to the operator combination submodule;
wherein the operation combination strategy is to combine one or more operators that are closest to the bit width of the operation data;
the operator combination submodule is used to combine a plurality of operators into a new operator according to the operator combination strategy so that a bit width of the new operator matches the bit width of the operation data, and the operation data is transmitted to the new operator;
the operation submodule is used to cause an operator that obtains the operation data to perform an operation.

2. The operation unit according to claim 1, **characterized in that** the operation unit performs operations according to an instruction, wherein the instruction comprises:
an operation code used to indicate an operation type of the instruction;
an operand used to as the operation data or a storage address for indicating the operation data;
a bit width domain used to indicate the bit width of the operation data;
wherein the operation unit executes the instruction, determines the bit width of the operation data according to the bid width domain of the instruction, and then transmits the operand of the instruction to the corresponding operator;
the operator obtains the operation data based on the operand and performs the operation indicated by the operation code.

3. The operation unit according to claim 1, **characterized in that** the operation unit performs an operation according to a bit width configuration instruction and an operation instruction, the bit width configuration instruction comprising an operation code and a bit width domain and the operation instruction comprising an operation code and an operand, wherein
the operation code is used to indicate an operation type of the instruction;
the operand is used to as the operation data or a storage address for indicating the operation data;
the bit width domain is used to indicate the bit width of each operand in the instruction;
wherein the operation unit sequentially executes the bit width configuration instruction and the operation instruction, determines the bit width of the operand of the operation instruction according to the bit width domain of the bit width configuration instruction, and then transmits the operand of the operation instruction to the corresponding operator;
the operator obtains the operation data based on the operand and performs the operation indicated by the operation code.

4. The operation unit according to claim 1, **characterized in that** the operand is an operation data or a storage location of the operation data, and the operator performs operation after obtaining corresponding operation data according to the operand.

5. The operation unit according to claim 1, **characterized in that** the operation data is one of a vector, a matrix, and a neuron.

6. An operation method for selecting a corresponding one or more operators to perform operations based on a bit width of an operation data, wherein the one or more operators have different bid widths,
**characterized in that** the operation method comprises
S1. a determination submodule determining whether there is an operator with the same bit width as the operation data,
and if so, transmitting the operation data to the corresponding operator, otherwise, transmitting an operator combination strategy and the operation data to an operator combination submodule;
wherein the operation combination strategy is to combine one or more operators that are closest to the bit width of the operation data;
S2. the operator combination submodule combining a plurality of operators into a new operator according to the operator combination strategy so that a bit width of the new operator matches the bit width of the operation data, and transmitting the operation data to the new operator;
S3. an operation submodule causing an operator that obtains the operation data to perform an operation.

7. The operation method according to claim 6, further comprising:
upon determining that there is no operator with the same bit width as the operation data in step S1, generating an operator combination strategy.

8. The operation method according to claim 6 or 7, further comprising
the operation method performing operations according to an instruction comprising:
an operation code used to indicate an operation type of the instruction;
an operand used to as the operation data or a storage address for indicating the operation data;
a bit width domain used to indicate the bit width of the operation data; and
wherein the operation method comprises
executing the instruction, determining the bit width of the operation data according to the bid width domain of the instruction, and then transmitting the operand of the instruction to the corresponding operator;
the operator obtaining the operation data based on the operand and performing the operation indicated by the operation code.

9. The operation method according to claim 6 or 7, further comprising
the operation method performing an operation according to a bit width configuration instruction and an operation instruction, the bit width configuration instruction comprising an operation code and a bit width domain and the operation instruction comprising an operation code and an operand, wherein
the operation code is used to indicate an operation type of the instruction;
the operand is used to as the operation data or a storage address for indicating the operation data;
the bit width domain is used to indicate the bit width of each operand in the instruction;
wherein the operation method comprises
sequentially executing the bit width configuration instruction and the operation instruction, determining the bit width of the operand of the operation instruction according to the bid width domain of the bit width configuration instruction, and then transmitting the operand of the operation instruction to the corresponding operator;
the operator obtaining the operation data based on the operand and performing the operation indicated by the operation code.

10. The operation method according to claim 6 or 7, **characterized in that** the operand is an operation data or a storage location of the operation data, and the operation method further comprises
the operator performing operation after obtaining corresponding operation data according to the operand.

11. The operation method according to claim 6 or 7, **characterized in that** the operation data is one of a vector, a matrix, and a neuron.

12. An operation device, **characterized by** comprising:
the operation unit according to any one of claims 1-4;
an storage unit used to store the operation data;
a register unit used to store the address of the operation data;
a control unit used to control the operation unit, the storage unit and the register unit so that the operation unit accesses the register unit according to the operand of the instruction to obtain the address of the operation data and accesses the storage unit according to the address of the operation data to obtain the operation data so as to perform an operation on the operation data.

13. The operation device according to claim 12, **characterized in that** the storage unit is a Scratchpad memory.

## Patentansprüche

1. Operationseinheit zum Auswählen eines entsprechenden einen oder entsprechender mehrerer Operatoren zum Durchführen von Operationen auf der Grundlage einer Bitbreite von Operationsdaten, wobei der eine oder die mehreren Operatoren unterschiedliche Bitbreiten aufweisen,
**dadurch gekennzeichnet, dass** die Operationseinheit ein Bestimmungs-Teilmodul, ein Operatorkombinations-Teilmodul und ein Operations-Teilmodul umfasst;
wobei das Bestimmungs-Teilmodul verwendet wird, um zu bestimmen, ob es einen Operator mit der gleichen Bitbreite wie die Operationsdaten gibt, und wenn ja, so werden die Operationsdaten an den entsprechenden Operator gesendet, anderenfalls werden eine Operatorkombinationsstrategie und die Operationsdaten an das Operatorkombinations-Teilmodul gesendet;
wobei die Operatorkombinationsstrategie darin besteht, einen oder mehrere Operatoren zu kombinieren, die der Bitbreite der Operationsdaten am nächsten liegen;
wobei das Operatorkombinations-Teilmodul verwendet wird, um mehrere Operatoren gemäß der Operatorkombinationsstrategie zu einem neuen Operator zu kombinieren, so dass eine Bitbreite des neuen Operators mit der Bitbreite der Operationsdaten übereinstimmt, und die Operationsdaten an den neuen Operator gesendet werden;
wobei das Operations-Teilmodul verwendet wird, um einen Operator, der die Operationsdaten erhält, zu veranlassen, eine Operation durchzuführen.

2. Operationseinheit nach Anspruch 1, **dadurch gekennzeichnet, dass** die Operationseinheit Operationen gemäß einer Instruktion durchführt, wobei die Instruktion umfasst:
einen Operationscode, der dafür verwendet wird, einen Operationstyp der Instruktion anzugeben;
einen Operanden, der als die Operationsdaten verwendet wird, oder eine Speicheradresse zum Angeben der Operationsdaten;
eine Bitbreitendomäne, die dafür verwendet wird, die Bitbreite der Operationsdaten anzugeben;
wobei die Operationseinheit die Instruktion ausführt, die Bitbreite der Operationsdaten gemäß der Bitbreitendomäne der Instruktion bestimmt, und dann den Operanden der Instruktion an den entsprechenden Operator sendet;
der Operator die Operationsdaten auf der Grundlage des Operanden erhält und die durch den Operationscode angegebene Operation durchführt.

3. Operationseinheit nach Anspruch 1, **dadurch gekennzeichnet, dass** die Operationseinheit eine Operation gemäß einer Bitbreitenkonfigurationsinstruktion und einer Operationsinstruktion durchführt, wobei die Bitbreitenkonfigurationsinstruktion einen Operationscode und eine Bitbreitendomäne umfasst, und die Operationsinstruktion einen Operationscode und einen Operanden umfasst, wobei
der Operationscode dafür verwendet wird, einen Operationstyp der Instruktion anzugeben;
der Operand als die Operationsdaten oder als eine Speicheradresse zum Angeben der Operationsdaten verwendet wird;
die Bitbreitendomäne dafür verwendet wird, die Bitbreite jedes Operanden in der Instruktion anzugeben;
wobei die Operationseinheit die Bitbreitenkonfigurationsinstruktion und die Operationsinstruktion sequentiell ausführt, die Bitbreite des Operanden der Operationsinstruktion gemäß der Bitbreitendomäne der Bitbreitenkonfigurationsinstruktion bestimmt, und dann den Operanden der Operationsinstruktion an den entsprechenden Operator sendet;
der Operator die Operationsdaten auf der Grundlage des Operanden erhält und die durch den Operationscode angegebene Operation durchführt.

4. Operationseinheit nach Anspruch 1, **dadurch gekennzeichnet, dass** der Operand Operationsdaten oder ein Speicherplatz der Operationsdaten ist, und der Operator eine Operation durchführt, nachdem er entsprechende Operationsdaten gemäß dem Operanden erhalten hat.

5. Operationseinheit nach Anspruch 1, **dadurch gekennzeichnet, dass** die Operationsdaten eines von einem Vektor, einer Matrix und einem Neuron sind.

6. Operationsverfahren zum Auswählen eines entsprechenden einen oder entsprechender mehrerer Operatoren zum Durchführen von Operationen auf der Grundlage einer Bitbreite von Operationsdaten, wobei der eine oder die mehreren Operatoren unterschiedliche Bitbreiten aufweisen,
**dadurch gekennzeichnet, dass** das Operationsverfahren umfasst:
S1. ein Bestimmungs-Teilmodul bestimmt, ob es einen Operator mit der gleichen Bitbreite wie die Operationsdaten gibt,
und wenn ja, Senden der Operationsdaten an den entsprechenden Operator, anderenfalls Senden einer Operatorkombinationsstrategie und der Operationsdaten an ein Operatorkombinations-Teilmodul;
wobei die Operatorkombinationsstrategie darin besteht, einen oder mehrere Operatoren zu kombinieren, die der Bitbreite der Operationsdaten am nächsten liegen;
S2. das Operatorkombinations-Teilmodul kombiniert mehrere Operatoren gemäß der Operatorkombinationsstrategie zu einem neuen Operator, dergestalt, dass eine Bitbreite des neuen Operators mit der Bitbreite der Operationsdaten übereinstimmt, und Senden der Operationsdaten an den neuen Operator;
S3. ein Operations-Teilmodul veranlasst einen Operator, der die Operationsdaten erhält, eine Operation durchzuführen.

7. Operationsverfahren nach Anspruch 6, das des Weiteren umfasst:
wenn in Schritt S1 bestimmt wird, dass es keinen Operator mit der gleichen Bitbreite wie die Operationsdaten gibt, Generieren einer Operatorkombinationsstrategie.

8. Operationsverfahren nach Anspruch 6 oder 7, das des Weiteren umfasst,
dass das Operationsverfahren Operationen gemäß einer Instruktion durchführt, die umfasst:
einen Operationscode, der dafür verwendet wird, einen Operationstyp der Instruktion anzugeben;
einen Operanden, der als die Operationsdaten verwendet wird, oder eine Speicheradresse zum Angeben der Operationsdaten;
eine Bitbreitendomäne, die dafür verwendet wird, die Bitbreite der Operationsdaten anzugeben; und
wobei das Operationsverfahren umfasst:
Ausführen der Instruktion, Bestimmen der Bitbreite der Operationsdaten gemäß der Bitbreitendomäne der Instruktion, und anschließendes Senden des Operanden der Instruktion an den entsprechenden Operator; und
dass der Operator die Operationsdaten auf der Grundlage des Operanden erhält und die durch den Operationscode angegebene Operation durchführt.

9. Operationsverfahren nach Anspruch 6 oder 7, das des Weiteren umfasst, dass:
das Operationsverfahren eine Operation gemäß einer Bitbreitenkonfigurationsinstruktion und einer Operationsinstruktion durchführt, wobei die Bitbreitenkonfigurationsinstruktion einen Operationscode und eine Bitbreitendomäne umfasst, und die Operationsinstruktion einen Operationscode und einen Operanden umfasst, wobei
der Operationscode dafür verwendet wird, einen Operationstyp der Instruktion anzugeben;
der Operand als die Operationsdaten oder als eine Speicheradresse zum Angeben der Operationsdaten verwendet wird;
die Bitbreitendomäne dafür verwendet wird, die Bitbreite jedes Operanden in der Instruktion anzugeben;
wobei das Operationsverfahren umfasst:
sequentielles Ausführen der Bitbreitenkonfigurationsinstruktion und der Operationsinstruktion, Bestimmen der Bitbreite des Operanden der Operationsinstruktion gemäß der Bitbreitendomäne der Bitbreitenkonfigurationsinstruktion, und anschließendes Senden des Operanden der Operationsinstruktion an den entsprechenden Operator; und
dass der Operator die Operationsdaten auf der Grundlage des Operanden erhält und die durch den Operationscode angegebene Operation durchführt.

10. Operationsverfahren nach Anspruch 6 oder 7, **dadurch gekennzeichnet, dass** der Operand Operationsdaten oder ein Speicherplatz der Operationsdaten ist, und das Operationsverfahren des Weiteren umfasst, dass
der Operator eine Operation durchführt, nachdem er entsprechende Operationsdaten gemäß dem Operanden erhalten hat.

11. Operationsverfahren nach Anspruch 6 oder 7, **dadurch gekennzeichnet, dass** die Operationsdaten eines von einem Vektor, einer Matrix und einem Neuron sind.

12. Operationsvorrichtung, **dadurch gekennzeichnet, dass** sie umfasst:
die Operationseinheit nach einem der Ansprüche 1-4;
eine Speichereinheit, die zum Speichern der Operationsdaten verwendet wird;
eine Registereinheit, die zum Speichern der Adresse der Operationsdaten verwendet wird;
eine Steuereinheit, die dafür verwendet wird, die Operationseinheit, die Speichereinheit und die Registereinheit so zu steuern, dass die Operationseinheit auf die Registereinheit gemäß dem Operanden der Instruktion zugreift, um die Adresse der Operationsdaten zu erhalten, und auf die Speichereinheit gemäß der Adresse der Operationsdaten zugreift, um die Operationsdaten zu erhalten, um eine Operation an den Operationsdaten durchzuführen.

13. Operationsvorrichtung nach Anspruch 12, **dadurch gekennzeichnet, dass** die Speichereinheit ein Scratchpad-Speicher ist.

## Revendications

1. Unité d'opération pour sélectionner un opérateur correspondant parmi un ou plusieurs opérateurs pour réaliser des opérations sur la base d'une largeur de bits d'une donnée d'opération, dans laquelle les un ou plusieurs opérateurs ont différentes largeurs de bits,
**caractérisée en ce que** l'unité d'opération comprend un sous-module de détermination, un sous-module de combinaison d'opérateurs et un sous-module d'opération ;
le sous-module de détermination est utilisé pour déterminer s'il y a un opérateur avec la même largeur de bits que la donnée d'opération et, si tel est le cas, la donnée d'opération est transmise à l'opérateur correspondant, sinon une stratégie de combinaison d'opérateurs et la donnée d'opération sont transmises au sous-module de combinaison d'opérateurs ;
dans laquelle la stratégie de combinaison d'opérateurs consiste à combiner un ou plusieurs opérateurs qui sont les plus proches de la largeur de bits de la donnée d'opération ;
le sous-module de combinaison d'opérateurs est utilisé pour combiner une pluralité d'opérateurs dans un nouvel opérateur selon la stratégie de combinaison d'opérateurs de sorte qu'une largeur de bits du nouvel opérateur corresponde à la largeur de bits de la donnée d'opération, et la donnée d'opération est transmise au nouvel opérateur ;
le sous-module d'opération est utilisé pour amener un opérateur qui obtient la donnée d'opération à réaliser une opération.

2. Unité d'opération selon la revendication 1, **caractérisée en ce que** l'unité d'opération réalise des opérations selon une instruction, dans laquelle l'instruction comprend :
un code d'opération utilisé pour indiquer un type d'opération de l'instruction ;
un opérande utilisé en tant que la donnée d'opération ou une adresse de stockage pour indiquer la donnée d'opération ;
un domaine de largeur de bits pour indiquer la largeur de bits de la donnée d'opération ;
dans laquelle l'unité d'opération exécute l'instruction, détermine la largeur de bits de la donnée d'opération selon le domaine de largeur de bits de l'instruction, puis transmet l'opérande de l'instruction à l'opérateur correspondant ;
l'opérateur obtient la donnée d'opération sur la base de l'opérande et réalise l'opération indiquée par le code d'opération.

3. Unité d'opération selon la revendication 1, **caractérisée en ce que** l'unité d'opération réalise une opération selon une instruction de configuration de largeur de bits et une instruction d'opération, l'instruction de configuration de largeur de bits comprenant un code d'opération et un domaine de largeur de bits et l'instruction d'opération comprenant un code d'opération et un opérande, dans laquelle
le code d'opération est utilisé pour indiquer un type d'opération de l'instruction ;
l'opérande est utilisé en tant que la donnée d'opération ou une adresse de stockage pour indiquer la donnée d'opération ;
le domaine de largeur de bits est utilisé pour indiquer la largeur de bits de chaque opérande dans l'instruction ;
dans laquelle l'unité d'opération séquentiellement exécute l'instruction de configuration de largeur de bits et l'instruction d'opération, détermine la largeur de bits de l'opérande de l'instruction d'opération selon le domaine de largeur de bits de l'instruction de configuration de largeur de bits, puis transmet l'opérande de l'instruction d'opération à l'opérateur correspondant ;
l'opérateur obtient la donnée d'opération sur la base de l'opérande et réalise l'opération indiquée par le code d'opération.

4. Unité d'opération selon la revendication 1, **caractérisée en ce que** l'opérande est une donnée d'opération ou un emplacement de stockage de la donnée d'opération, et l'opérateur réalise une opération après l'obtention de la donnée d'opération correspondante selon l'opérande.

5. Unité d'opération selon la revendication 1, **caractérisée en ce que** la donnée d'opération est l'un parmi un vecteur, une matrice et un neurone.

6. Procédé d'opération pour sélectionner un opérateur correspondant parmi un ou plusieurs opérateurs pour réaliser des opérations sur la base d'une largeur de bits d'une donnée d'opération, dans lequel les un ou plusieurs opérateurs ont différentes largeurs de bits,
**caractérisé en ce que** le procédé d'opération comprend :
S1. un sous-module de détermination déterminant s'il y a un opérateur avec la même largeur de bits que la donnée d'opération,
et, si tel est le cas, transmettant la donnée d'opération à l'opérateur correspondant, sinon transmettant une stratégie de combinaison d'opérateurs et la donnée d'opération à un sous-module de combinaison d'opérateurs ;
dans lequel la stratégie de combinaison d'opérateurs consiste à combiner un ou plusieurs opérateurs qui sont les plus proches de la largeur de bits de la donnée d'opération ;
S2. le sous-module de combinaison d'opérateurs combinant une pluralité d'opérateurs dans un nouvel opérateur selon la stratégie de combinaison d'opérateurs de sorte qu'une largeur de bits du nouvel opérateur corresponde à la largeur de bits de la donnée d'opération, et transmettant la donnée d'opération au nouvel opérateur ;
S3. un sous-module d'opération amenant un opérateur qui obtient la donnée d'opération à réaliser une opération.

7. Procédé d'opération selon la revendication 6, comprenant en outre :
à la détermination qu'il n'y a pas d'opérateur avec la même largeur de bits que la donnée d'opération à l'étape S1, la génération d'une stratégie de combinaison d'opérateurs.

8. Procédé d'opération selon la revendication 6 ou 7, comprenant en outre
le procédé d'opération réalisant des opérations selon une instruction comprenant :
un code d'opération utilisé pour indiquer un type d'opération de l'instruction ;
un opérande utilisé en tant que la donnée d'opération ou une adresse de stockage pour indiquer la donnée d'opération ;
un domaine de largeur de bits pour indiquer la largeur de bits de la donnée d'opération ; et
dans lequel le procédé d'opération comprend
l'exécution de l'instruction, la détermination de la largeur de bits de la donnée d'opération selon le domaine de largeur de bits de l'instruction, puis la transmission de l'opérande de l'instruction à l'opérateur correspondant ;
l'opérateur obtenant la donnée d'opération sur la base de l'opérande et réalisant l'opération indiquée par le code d'opération.

9. Procédé d'opération selon la revendication 6 ou 7, comprenant en outre
le procédé d'opération réalisant une opération selon une instruction de configuration de largeur de bits et une instruction d'opération, l'instruction de configuration de largeur de bits comprenant un code d'opération et un domaine de largeur de bits et l'instruction d'opération comprenant un code d'opération et un opérande, dans lequel
le code d'opération est utilisé pour indiquer un type d'opération de l'instruction ;
l'opérande est utilisé en tant que la donnée d'opération ou une adresse de stockage pour indiquer la donnée d'opération ;
le domaine de largeur de bits est utilisé pour indiquer la largeur de bits de chaque opérande dans l'instruction ;
dans lequel le procédé d'opération comprend
séquentiellement l'exécution de l'instruction de configuration de largeur de bits et de l'instruction d'opération, la détermination de la largeur de bits de l'opérande de l'instruction d'opération selon le domaine de largeur de bits de l'instruction de configuration de largeur de bits, puis la transmission de l'opérande de l'instruction d'opération à l'opérateur correspondant ;
l'opérateur obtenant la donnée d'opération sur la base de l'opérande et réalisant l'opération indiquée par le code d'opération.

10. Procédé d'opération selon la revendication 6 ou 7, **caractérisé en ce que** l'opérande est une donnée d'opération ou un emplacement de stockage de la donnée d'opération, et le procédé d'opération comprend en outre
l'opérateur réalisant une opération après l'obtention de la donnée d'opération correspondante selon l'opérande.

11. Procédé d'opération selon la revendication 6 ou 7, **caractérisé en ce que** la donnée d'opération est l'un parmi un vecteur, une matrice et un neurone.

12. Dispositif d'opération, **caractérisé en ce qu'**il comprend :
l'unité d'opération selon l'une quelconque des revendications 1 à 4 ;
une unité de stockage utilisée pour stocker la donnée d'opération ;
une unité de registre utilisée pour stocker l'adresse de la donnée d'opération ;
une unité de commande utilisée pour commander l'unité d'opération, l'unité de stockage et l'unité de registre de sorte que l'unité d'opération accède à l'unité de registre selon l'opérande de l'instruction pour obtenir l'adresse de la donnée d'opération et accède à l'unité de stockage selon l'adresse de la donnée d'opération pour obtenir la donnée d'opération de manière à réaliser une opération sur la donnée d'opération.

13. Dispositif d'opération selon la revendication 12, **caractérisé en ce que** l'unité de stockage est une mémoire de travail (Scratchpad).
